(19) Europäisches Patentamt / European Patent Office / Office européen des brevets

(11) **EP 2 397 348 B1**

(12) **EUROPEAN PATENT SPECIFICATION**

(45) Date of publication and mention
of the grant of the patent:
**19.08.2015 Bulletin 2015/34**

(51) Int Cl.:
***B60G 21/055*** *(2006.01)*    ***B60G 17/0165*** *(2006.01)*
***B60G 17/016*** *(2006.01)*    ***B60G 17/08*** *(2006.01)*

(21) Application number: **09840007.0**

(22) Date of filing: **16.02.2009**

(86) International application number:
**PCT/JP2009/052498**

(87) International publication number:
**WO 2010/092687 (19.08.2010 Gazette 2010/33)**

(54) **STABILIZER CONTROL DEVICE FOR VEHICLE**

STABILISATORSTEUERVORRICHTUNG FÜR FAHRZEUGE

DISPOSITIF DE COMMANDE DE STABILISATEUR POUR VÉHICULE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**21.12.2011 Bulletin 2011/51**

(73) Proprietor: **TOYOTA JIDOSHA KABUSHIKI
KAISHA
Toyota-shi, Aichi-ken, 471-8571 (JP)**

(72) Inventors:
• **MIZUTA, Yuichi
Toyota-shi,
Aichi-ken, 471-8571 (JP)**
• **KUROKOCHI, Takashi
Toyota-shi,
Aichi-ken, 471-8571 (JP)**
• **TSUMANO, Mitsuhiro
Toyota-shi,
Aichi-ken, 471-8571 (JP)**

(74) Representative: **Winter, Brandl, Fürniss, Hübner,
Röss, Kaiser, Polte - Partnerschaft mbB
Patent- und Rechtsanwaltskanzlei
Bavariaring 10
80336 München (DE)**

(56) References cited:
EP-A1- 1 705 038        EP-A1- 1 719 643
EP-A2- 1 213 163        EP-A2- 1 362 720
WO-A1-2007/054500       JP-A- 1 078 914
JP-A- 2 185 817         JP-A- 62 221 909
JP-A- 2006 007 803      JP-A- 2006 096 077
JP-T- 2008 544 925      US-A1- 2007 088 476
US-B1- 6 282 471

## Description

Technical Field

The present invention relates to a stabilizer control device for a vehicle which performs a variable control of torsional stiffness of a stabilizer provided between right and left wheels.

Background Technique

This kind of technique is proposed in Patent References 1 to 8, for example. In Patent Reference-1, there is proposed a technique for controlling an active stabilizer based on a difference of a stroke of wheels between right and left and a difference of a stroke speed between right and left so as to ensure a riding quality at the time of going straight, and for controlling the active stabilizer so as to suppress a roll angle at the time of turning. In Patent Reference-2, there is proposed a technique for calculating anti-rollmomentsgenerated by an active stabilizer and an air suspension, respectively, based on a lateral acceleration. In Patent Reference-3, there is proposed a technique for calculating a target roll angle of a vehicle based on a lateral acceleration and for calculating a target anti-roll moment generated by a damping force control and a target anti-roll moment generated by an active stabilizer control. In Patent Reference-4, as for a technique for controlling an active stabilizer based on a lateral acceleration so as to suppress a deterioration of a riding quality due to a roughness of a road surface, there is proposed a technique for locking the stabilizer when a vertical acceleration of a vehicle body exceeds a threshold value. In Patent Reference-5, there is proposed a control device for posture, wherein a lateral acceleration applied to a vehicle body is calculated from the signals of a vehicle speed sensor and a handle angle sensor and a roll moment T is obtained based on this to carry out the feed-forward control of the rotation angles of actuator to which stabilizer bars are connected. In Patent Reference-6 there is proposed a stabilizer control device according to the preamble of claim 1. In Patent Reference-7 there is proposed a technique for stabilizing a motor vehicle. A lateral force is determined while a total roll counter-moment is determined which counteracts a roll motion of the vehicle body. In Patent Reference-8 there is proposed a stabilizer control apparatus for controlling a torsional rigidity and roll damping, wherein the stabilizer can be controlled actively. In Patent Reference-8 there is proposed a stabilizer control apparatus for controlling a torsional rigidity.

Patent Reference-1: JP 2005-238971 A
Patent Reference-2JP 2006-7803 A
Patent Reference-3: JP 2006-256368 A
Patent Reference-4: JP 2007-245887 A
Patent Reference-5: JPS6478914 A
Patent Reference-6: US 2007/088476 A1
Patent Reference-7: WO 2007-054500 A1
Patent Reference-8: EP 1 719 643 A1

Disclosure of Invention

PROBLEM TO BE SOLVED BY THE INVENTION

However, since the technique described in the above-mentioned Patent Reference 1 basically performs the control based on the difference of the stroke of wheels between right and left, there is a case that the technique is influenced by the bump of the road surface in the right-left direction. Namely, it is difficult to appropriately suppress a roll due to a steering input and a roll due to a road surface disturbance input. Additionally, in the techniques described in the above-mentioned Patent References 2 to 4, it is difficult to appropriately suppress both the roll due to the steering input and the roll due to the road surface disturbance input, by the stabilizer control, too.

The present invention is made to solve the problem described above, and it is an object of the invention to provide a stabilizer control device for a vehicle capable of appropriately suppressing a roll due to a steering input and a roll due to a road surface disturbance input and balancing a handling and stability with a riding quality.

MEANS FOR SOLVING THE PROBLEM

According to one aspect of the present invention, there is provided a stabilizer control device for a vehicle which performs a variable control of a torsional stiffness of a stabilizer provided between right and left wheels of the vehicle, including: an absolute roll information obtaining unit which obtains absolute roll information above a spring from an output of a sensor installed above the spring in the vehicle; and a stabilizer control unit which calculates a first anti-roll moment based on the absolute roll information and controls the stabilizer based on the first anti-roll moment, wherein the stabilizer control unit changes a control amount of the stabilizerbasedon the first anti-roll moment, in accordance with a frequency of a road surface input to front and rear suspensions.

The above stabilizer control device for the vehicle performs the variable control of the torsional stiffness of the stabilizer provided between the right and left wheels. The absolute roll information obtaining unit obtains the absolute roll information above the spring (the information means a roll on the basis of a direction of gravitational force), and the stabilizer control unit calculates the first anti-roll moment based on the absolute roll information and controls the stabilizer. Therefore, it becomes possible to perform the control of the riding quality by the stabilizer (active stabilizer) with accuracy.

In a manner of the above stabilizer control device for the vehicle, the stabilizer control unit further calculates a second anti-roll moment based on a steering input and controls the stabilizer based on the first anti-roll moment and the second anti-roll moment. For example, the stabilizer control unit sets control gains of the first anti-roll moment and the second anti-roll moment based on a vehicle turning degree. Therefore, it becomes possible to perform the control of the riding quality with accuracy during turning on the rough road. Thereby, it becomes possible to balance the handling and stability with the riding quality.

In another manner of the above stabilizer control device for the vehicle, the stabilizer control unit changes a front-rear allocation rate for allocating the first anti-roll moment to a front wheels side and a rear wheels side, in accordance with a vehicle turning degree. Therefore, it becomes possible to appropriately suppress the decrease of the steering characteristics.

In another manner of the above stabilizer control device for the vehicle, the stabilizer control unit changes a front-rear allocation rate for allocating the first anti-roll moment to a front wheels side and a rear wheels side, in accordance with a vehicle speed. Therefore, it becomes possible to effectively suppress the roll of the vehicle.

In another manner, the above stabilizer control device for the vehicle further comprises a damping force control unit which performs a control of the vehicle in a vertical direction, a roll direction and a pitch direction, by applying a damping force, and, when the control by the stabilizer control unit is performed, the damping force control unit increases a control gain in the vertical direction and the pitch direction and decreases a control gain in the roll direction, in the control of the damping force. Therefore, it becomes possible to make the stabilizer control system and the damping force control system specialize in the mode (up-down, roll and pitch) which the respective actuators are good at.

In another manner of the above stabilizer control device for the vehicle, the stabilizer control unit changes a front-rear allocation rate for allocating the first anti-roll moment to a front wheels side and a rear wheels side, in accordance with elapsed time from a start of the control based on the first anti-roll moment. Therefore, it becomes possible to suppress the control contradiction caused by the responsiveness of the actuator.

In another manner of the above stabilizer control device for the vehicle, the stabilizer control unit changes a front-rear allocation rate for allocating the first anti-roll moment to a front wheels side and a rear wheels side, in accordance with a rate of a road surface input to front and rear suspensions. Therefore, it becomes possible to suppress the control contradiction caused by the responsiveness of the actuator.

In a preferred example of the above stabilizer control device for the vehicle, the stabilizer control unit performs the control of the stabilizer based on the first anti-roll moment when the frequency of the road surface input is within a predetermined value, and performs a control of the stabilizer so as to set a neutral state or a free state when the frequency of the road surface input exceeds the predetermined value. Therefore, it becomes possible to appropriately suppress the control contradiction caused by the responsiveness of the actuator.

In a preferred example of the above stabilizer control device for the vehicle, when the road surface input has an overlap with a frequency input within a predetermined value and a frequency exceeding the predetermined value, the stabilizer control unit performs a first control of the stabilizer provided to one of front wheels and rear wheels, based on the first anti-roll moment, and performs a second control of the stabilizer provided to the other so as to set a neutral state or a free state. Therefore, it is possible to appropriately decrease the overlapped input, and it becomes possible to improve the riding quality.

Preferably, when the first control is performed in a turning state, the stabilizer control unit controls the stabilizer based on the first anti-roll moment and a second anti-roll moment calculated by a steering input, and sets a control gain of the first anti-roll moment smaller and sets a control gain of the second anti-roll moment larger, as a vehicle turning degree becomes larger. Therefore, it becomes possible to appropriately balance the riding quality with the handling and stability without sacrificing the steering feeling.

In another manner of the above stabilizer control device for the vehicle, the stabilizer control unit sets a control gain of the first anti-roll moment larger and sets a control gain of the second anti-roll moment smaller, as a degree of a rough road becomes larger. Therefore, it becomes possible to intensively suppress the roll caused by the rough road.

BRIEF DESCRIPTION OF THE DRAWINGS

FIG. 1 is a schematic diagram showing a configuration of a vehicle to which a stabilizer control device for a vehicle according to an embodiment is applied.

FIGS. 2A and 2B are diagrams for explaining a method for calculating a front-rear allocation rate of a road surface input target anti-roll moment in a first embodiment.

FIG. 3 is a schematic diagram showing a calculation process in a first embodiment.

FIG. 4 is a schematic diagram showing a calculation process in a second embodiment.

FIGS. 5A and 5B are diagrams for explaining a method for calculating a front-rear allocation rate of a road surface input target anti-roll moment in a third embodiment.

FIG. 6 is a schematic diagram showing a calculation process in a third embodiment.

FIG. 7 is a diagram for explaining a method for calculating a control gain for a steering input and a control gain for a road surface input in a fourth embodiment.

FIG. 8 is a flow chart showing a stabilizer control process in a fourth embodiment.

FIG. 9 is a flow chart showing a control process in a first example of a fifth embodiment.

FIG. 10 is a flow chart showing a control process in a second example of a fifth embodiment.

FIG. 11 is a diagram for explaining a method for calculating a control gain for a steering input and a control gain for a road surface input in a third example of a fifth embodiment.

FIG. 12 is a flow chart showing a control process in a third example of a fifth embodiment.

BRIEF DESCRIPTION OF THE REFERENCE NUMBER

[0018]

10fR, 10fL Front Wheel
10rR, 10rL Rear Wheel
14 Steering Wheel
16, 18 Active Stabilizer Device
16a, 18b Stabilizer Actuator
31 Steering Angle Sensor
32 Vehicle Speed Sensor
33 Lateral Acceleration Sensor
34 Roll Speed Sensor
50 ECU

DETAILED DESCRIPTION OF THE PREFERRED EMBODIMENTS

Preferred embodiments of the present invention will be explained hereinafter with reference to the drawings.

[Vehicle Configuration]

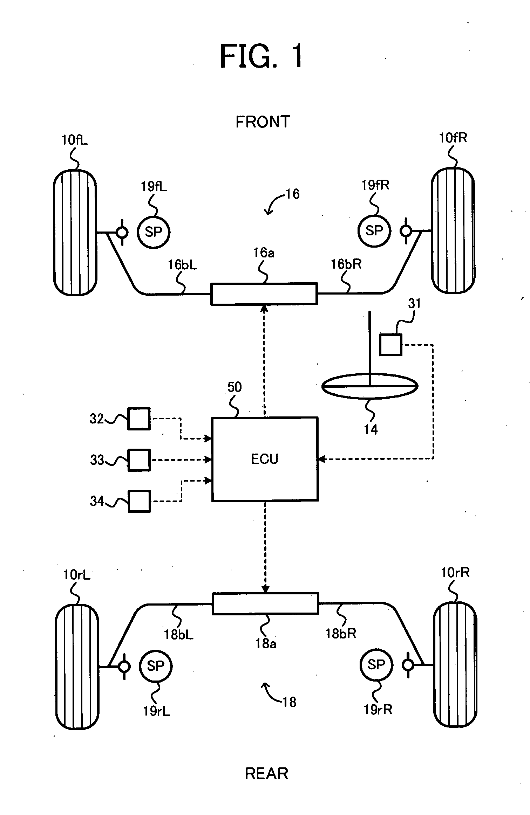

First, a description will be given of an entire configuration of a vehicle to which a stabilizer control device for a vehicle according to an embodiment is applied, with reference to FIG. 1.

FIG. 1 is a schematic diagram showing a configuration of a vehicle. FIG. 1 is the diagram of the vehicle observed from above. The upper side shows the front of the vehicle, and the lower side shows the rear of the vehicle. Additionally, the broken arrow shows the input/output of the signal.

The vehicle mainly includes front wheels 10fR and 10fL, rear wheels 10rR and 10rL, a steering wheel 14, active stabilizer devices 16, 18, suspension springs 19fR, 19fL, 19rR and 19rL, various types of sensors 31 to 34 and an ECU (Electronic Control Unit) 50. Hereinafter, as for the symmetrically-arranged components, "R" and "L" are applied to the reference numerals when it is necessary to discriminate the right from the left, and "R" and "L" are omitted when it is not necessary to discriminate the right from the left.

The power generated by an engine which is not shown is transmitted to the front wheels 10f and/or the rear wheels 10r. The front wheels 10fR and 10fL are steered via a tie rod (which is not shown), in accordance with a steering of the steering wheel 14 by a driver.

The active stabilizer device 16 is provided between the right front wheel 10fR and the left front wheel 10fL, and the active stabilizer device 18 is provided between the right rear wheel 10rR and the left rear wheel 10rL. The active stabilizer devices 16 and 18 act as a torsional spring, when a motion in a roll direction is input to a vehicle body (which is not shown) . Namely, the active stabilizer devices 16 and 18 are formed to be able to apply an anti-roll moment to the vehicle body in order to suppress a roll angle caused by the roll motion of the vehicle body.

Concretely, the active stabilizer device 16 mainly includes a stabilizer actuator 16a and stabilizer bars 16bL and 16bR. The stabilizer actuator 16a drives a pair of the stabilizer bars 16bL and 16bR as necessary so that the stabilizer bars 16bL and 16bR mutually rotate in the opposite direction, and changes the force for suppressing the bound and/or rebound of the wheels by the torsional stress when the right front wheel 10fR and the left front wheel 10fL mutually bound and/or rebound in the reverse phase. Thereby, the stabilizer actuator 16a increases and decreases the anti-roll moment applied to the vehicle at the position of the right and left front wheels 10f so as to perform the variable control of the roll stiffness of the vehicle on the front wheels 10f side.

Similarly, the active stabilizer device 18 mainly includes a stabilizer actuator 18a and stabilizer bars 18bL and 18bR. The stabilizer actuator 18a drives a pair of the stabilizer bars 18bL and 18bR as necessary so that the stabilizer bars 18bL and 18bR mutually rotate in the opposite direction, and changes the force for suppressing the bound and/or rebound of the wheels by the torsional stress when the right rear wheel 10rR and the left rear wheel 10rL mutually bound and/or rebound in the reverse phase. Thereby, the stabilizer actuator 18a increases and decreases the anti-roll moment applied to the vehicle at the position of the right and left rear wheels 10r so as to perform the variable control of the roll stiffness of the vehicle on the rear wheels 10r side. The stabilizer actuators 16a and 18a are controlled by the control signal provided by the ECU 50, respectively.

In addition, the front wheels 10fR, 10fL and the rear wheels 10rR, 10rL are provided with the suspension springs 19fR, 19fL, 19rR and 19rL for reducing the transmission of the roughness of the road surface to the vehicle body, respectively.

The vehicle is provided with a steering angle sensor 31, a vehicle speed sensor 32, a lateral acceleration sensor 33 and a roll speed sensor 34. The steering angle sensor 31 detects the steering angle in accordance with the operation of the steering wheel 14 by the driver, and provides the ECU 50 with the detecting signal corresponding to the detected steering angle. The vehicle speed sensor 32 detects the speed of the vehicle (vehicle speed), and provides the ECU 50 with the detecting signal corresponding to the detected vehicle speed. The lateral acceleration sensor 33 detects the lateral acceleration (hereinafter suitably referred to as "lateral G"), and provides the ECU 50 with the detecting signal corresponding to the detected lateral acceleration.

The roll speed sensor 34 is fixed in the vehicle body above the spring (such as the suspension springs 19fR, 19fL, 19rR and 19rL) installed in the vehicle, and detects the roll speed of the vehicle. Namely, the roll speed sensor 34 functions as the absolute roll information obtaining unit in the present invention, and obtains the absolute roll information above the spring. The roll speed sensor 34 provides the ECU 50 with the detecting signal corresponding to the detected roll speed. It is not limited that the roll speed sensor 34 is used as the absolute roll information obtaining unit. For example, a vertical acceleration sensor which is fixed in the vehicle body above the spring may be used. Additionally, in the present specification, "absolute roll" means a roll on the basis of a direction of gravitational force.

The ECU 50 includes a CPU (Central Processing Unit), a ROM (Read Only Memory) and a RAM (Random Access Memory), which are not shown, and performs various controls of each component in the vehicle. In the embodiment, the ECU 50 mainly calculates the anti-roll moment applied to the vehicle based on the detecting signals provided by the above various types of sensors 31 to 34, and provides the active stabilizer devices 16 and 18 with the control signal corresponding to the anti-roll moment so as to perform the stabilizer control. Thus, the ECU 50 functions as the stabilizer control unit in the present invention.

Hereinafter, a concrete description will be given of embodiments of a control method performed by the ECU 50.

[First Embodiment]

A description will be given of a control method in a first embodiment. In the first embodiment, the ECU 50 calculates the anti-roll moment based on the roll speed obtained by the roll speed sensor 34, and controls the active stabilizer devices 16 and 18 based on the anti-roll moment. Namely, based on the absolute roll information above the spring, the ECU 50 calculates the anti-roll moment for suppressing a roll due to a road surface disturbance input (in other words, the anti-roll moment for ensuring a riding quality) so as to perform the stabilizer control. Hereinafter, the above anti-roll moment is suitably referred to as "road surface input target anti-roll moment". The road surface input target anti-roll moment corresponds to the first anti-roll moment in the present invention.

Additionally, the ECU 50 calculates the road surface input target anti-roll moment, and at the same time calculates an anti-roll moment (hereinafter suitably referred to as "steering input target anti-roll moment") based on a steering input and controls the active stabilizer devices 16 and 18 based on the road surface input target anti-roll moment and the steering input target anti-roll moment. The steering input target anti-roll moment is the anti-roll moment for suppressing a roll due to the steering input, and corresponds to the second anti-roll moment in the present invention. Concretely, by adding the road surface input target anti-roll moment to the steering input target anti-roll moment, the ECU 50 calculates an anti-roll moment finally applied to the vehicle so as to perform the stabilizer control. Therefore, it becomes possible to appropriately reduce the roll on any of a turning smooth road, a straight rough road and a turning rough road.

In addition, the ECU 50 calculates a front-rear allocation rate for allocating the above road surface input target anti-roll moment to the front wheels 10f side and the rear wheels 10r side, based on a driving state. Concretely, the ECU 50 changes the front-rear allocation rate of the road surface input target anti-roll moment, in accordance with a vehicle turning degree (for example, the lateral acceleration information). This is because, since a roll behavior generated by the steering is also included in the above-mentioned absolute roll information above the spring, the roll behavior influences steering characteristics of the vehicle. In other words, this is because an optimum front-rear allocation rate for ensuring the riding quality tends to be different from an optimum front-rear allocation rate for ensuring the handling and stability.

In addition, the ECU 50 changes the front-rear allocation rate of the road surface input target anti-roll moment, in accordance with the vehicle speed. This is because, as for the roll behavior at the time of singly climbing by one wheel, for example, the roll tends to effectively decrease when the front-rear allocation rate is set to the front side at the time of low speed and the front-rear allocation rate is set to the rear side at the time of high speed.

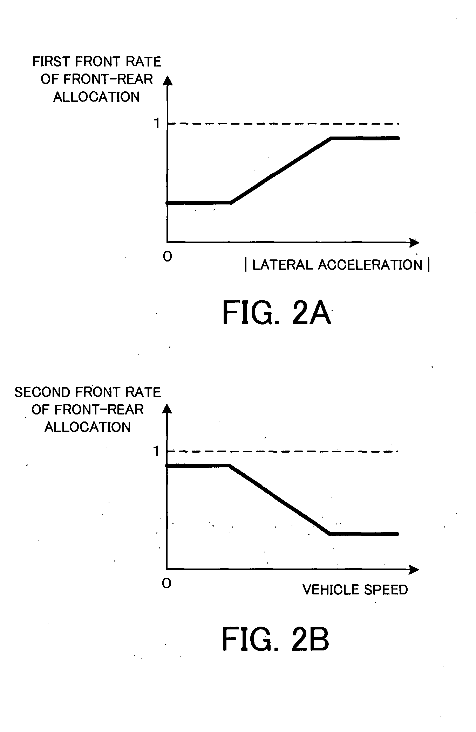

A description will be given of a concrete example of a method for calculating the front-rear allocation rate of the road surface input target anti-roll moment in the first embodiment, with reference to FIGS. 2A and 2B. Here, a description will be given of a method for calculating a front rate of the front-rear allocation, as the front-rear allocation rate. FIG. 2A shows an example of a map for calculating the front rate of the front-rear allocation (vertical axis) from the lateral acceleration (horizontal axis). The horizontal axis shows an absolute value of the lateral acceleration. Hereinafter, the front rate of the front-rear allocation calculated from the lateral acceleration is referred to as "first front rate of front-rear allocation". As shown in FIG. 2A, the first front rate of the front-rear allocation having the relatively small value is obtained when the lateral acceleration is small, and the first front rate of the front-rear allocation having the relatively large value is obtained when the lateral acceleration is large.

FIG. 2B shows an example of a map for calculating the front rate of the front-rear allocation (vertical axis) from the vehicle speed (horizontal axis). Hereinafter, the front rate of the front-rear allocation calculated from the vehicle speed is referred to as "second front rate of front-rear allocation". As shown in FIG. 2B, the second front rate of the front-rear allocation having the relatively large value is obtained when the vehicle speed is small, and the second front rate of the front-rear allocation having the relatively small value is obtained when the vehicle speed is large.

The ECU 50 multiplies the road surface input target anti-roll moment calculated from the roll speed by the obtained first front rate of the front-rear allocation and second front rate of the front-rear allocation so as to allocate the road surface input target anti-roll moment to the front wheels 10f side and the rear wheels 10r side. Hereinafter, the moment allocated to the front wheels 10f side is referred to as "front-wheel part of road surface input target anti-roll moment", and the moment allocated to the rear wheels 10r side is referred to as "rear-wheel part of road surface input target anti-roll moment".

(Calculation Process)

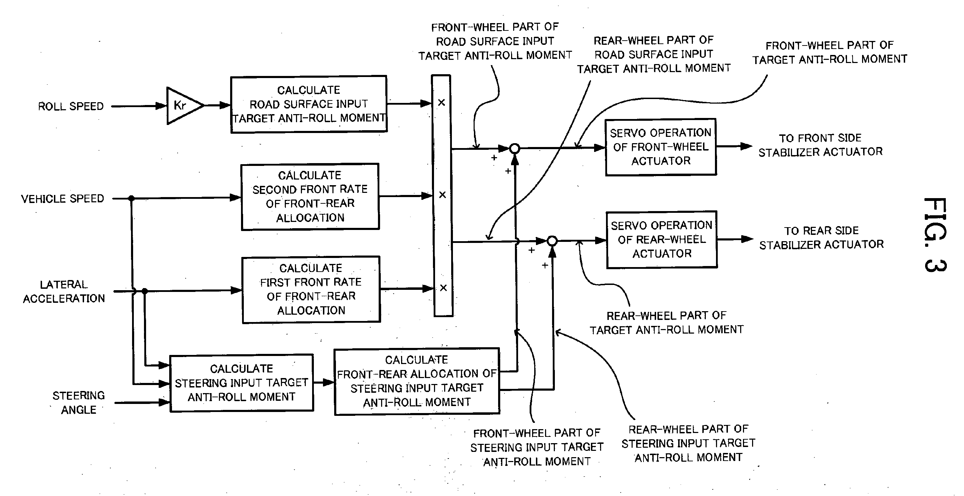

Next, a concrete description will be given of a calculation process in the first embodiment, with reference to FIG. 3. FIG. 3 is a schematic diagram showing the calculation process performed by the ECU 50 in the first embodiment.

The ECU 50 calculates the road surface input target anti-roll moment based on the roll speed obtained by the roll speed sensor 34 and a coefficient Kr. Additionally, the ECU 50 calculates the second front rate of the front-rear allocation from the vehicle speed with reference to the map as shown in FIG. 2B, and calculates the first front rate of the front-rear allocation from the lateral acceleration with reference to the map as shown in FIG. 2A. Then, the ECU 50 multiplies the road surface input target anti-roll moment by the first front rate of the front-rear allocation and the second front rate of the front-rear allocation so as to calculate the front-wheel part of the road surface input target anti-roll moment and the rear-wheel part of the road surface input target anti-roll moment.

Additionally, the ECU 50 calculates the above road surface input target anti-roll moment, and at the same time calculates the steering input target anti-roll moment based on the vehicle speed, the lateral acceleration and the steering angle. Then, the ECU 50 allocates the calculated steering input target anti-roll moment to the front wheels 10f side and the rear wheels 10r side. Hereinafter, the moment allocated to the front wheels 10f side is referred to as "front-wheel part of steering input target anti-roll moment", and the moment allocated to the rear wheels 10r side is referred to as "rear-wheel part of steering input target anti-roll moment".

Next, the ECU 50 calculates the front-wheel part of the target anti-roll moment by adding the front-wheel part of the road surface input target anti-roll moment to the front-wheel part of the steering input target anti-roll moment, and calculates the rear-wheel part of the target anti-roll moment by adding the rear-wheel part of the road surface input target anti-roll moment to the rear-wheel part of the steering input target anti-roll moment. Then, the ECU 50 performs the control of the stabilizer actuator 16a by a servo operation process so that the front-wheel part of the target anti-roll moment is applied by the active stabilizer device 16, and performs the control of the stabilizer actuator 18a by a servo operation process so that the rear-wheel part of the target anti-roll moment is applied by the active stabilizer device 18.

By the above first embodiment, it is possible to appropriately suppress the roll due to the steering input and the roll due to the road surface disturbance input, and it becomes possible to balance the handling and stability with the riding quality.

The above embodiment shows such an example that the front-rear allocation rate of the road surface input target anti-roll moment is changed based on both the vehicle turning degree (lateral acceleration) and the vehicle speed. The front-rear allocation rate may be changed based on only any one of the vehicle turning degree and the vehicle speed.

[Second Embodiment]

Next, a description will be given of a second embodiment. The second embodiment is different from the first embodiment in that a coordinated control of the stabilizer control and a damping force control is performed. Namely, when the body control above the spring (for example, the control of the vehicle in the vertical direction, the roll direction and the pitch direction) is performed by a damping force control system in addition to a stabilizer control system (concretely, corresponding to the active stabilizer devices 16 and 18. The same will apply hereinafter), the control method in the second embodiment is performed. For example, the damping force control system is a variable damping force type shock absorber.

Concretely, in the second embodiment, the control in the roll direction is mainly performed by the stabilizer control system because the stabilizer control system can generate an active force, and the damping force control system decreases a control amount in the roll direction by the control in the roll direction by the stabilizer control system, and increases a control amount in the vertical direction and the pitch direction. Specifically, when the above-mentioned stabilizer control is performed, the ECU 50 increases a control gain of the damping force control system in the vertical direction and the pitch direction, and decreases a control gain of the damping force control system in the roll direction. Therefore, it is possible to make the stabilizer control system and the damping force control system specialize in the mode (up-down, roll and pitch) which the respective actuators are good at, and it becomes possible to achieve a higher performance.

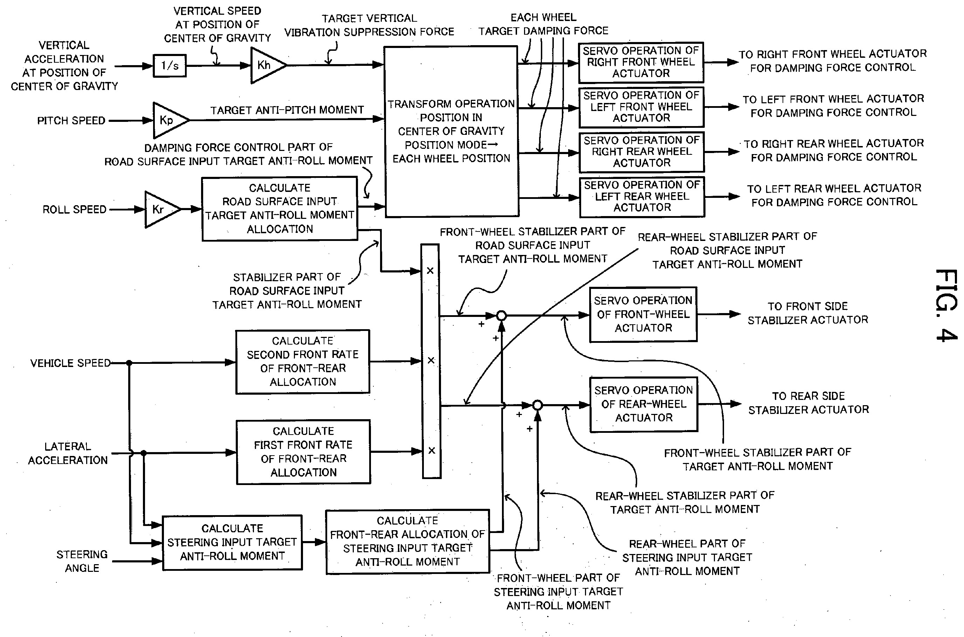

Here, a concrete description will be given of a calculation process in the second embodiment, with reference to FIG. 4. FIG. 4 is a schematic diagram showing the calculation process performed by the ECU 50 in the second embodiment.

The ECU 50 calculates a vertical speed at the position of the center of gravity by integrating a vertical acceleration at the position of the center of gravity (obtained by a sensor), and calculates a target vertical vibration suppression force from the vertical speed at the position of the center of gravity and a coefficient Kh. The ECU 50 calculates a target anti-pitch moment from a pitch speed (obtained by a sensor) and a coefficient Kp. Additionally, the ECU 50 calculates the road surface input target anti-roll moment from the roll speed and the coefficient Kr. Then, the ECU 50 allocates the calculated road surface input target anti-roll moment to a moment for the stabilizer control (hereinafter referred to as "stabilizer part of road surface input target anti-roll moment") and a moment for the damping force control (hereinafter referred to as "damping force control part of road surface input target anti-roll moment"). For example, the ECU 50 sets the control gain of the stabilizer control to a large value and sets the control gain of the damping force control to a small value. Then, the ECU 50 allocates the road surface input target anti-roll moment based on these control gains.

Next, the ECU 50 performs the damping force control and the stabilizer control based on the damping force control part of the road surface input target anti-roll moment and the stabilizer part of the road surface input target anti-roll moment which are calculated by the above manner. First, a description will be given of the damping force control. The ECU 50 performs a transform operation from the position in the center of the gravity position mode to each wheel position, and calculates a target damping force for each wheel (the right front wheel 10fR, the left front wheel 10fL, the right rear wheel 10rR and the left rear wheel 10rL), based on the target vertical vibration suppression force, the target anti-pitch moment and the damping force control part of the road surface input target anti-roll moment. Then, by the servo operation process, the ECU 50 performs the control of the actuator for the damping force control of each wheel so that the target damping force is applied to each wheel.

Next, a description will be given of the stabilizer control. By multiplying the above stabilizer part of the road surface input target anti-roll moment by the first front rate of the front-rear allocation and the second front rate of the front-rear allocation which are calculated by the method shown in the first embodiment, the ECU 50 allocates the stabilizer part of the road surface input target anti-roll moment to the front wheels 10f side and the rear wheels 10r side. Hereinafter, the moment allocated to the front wheels 10f side is referred to as "front-wheel stabilizer part of road surface input target anti-roll moment", and the moment allocated to the rear wheels 10r side is referred to as "rear-wheel stabilizer part of road surface input target anti-roll moment".

Thereafter, the ECU 50 calculates the front-wheel stabilizer part of the target anti-roll moment by adding the front-wheel stabilizer part of the road surface input target anti-roll moment to the front-wheel part of the steering input target anti-roll moment, and calculates the rear-wheel stabilizer part of the target anti-roll moment by adding the rear-wheel stabilizer part of the road surface input target anti-roll moment to the rear-wheel part of the steering input target anti-roll moment. The front-wheel part of the steering input target anti-roll moment and the rear-wheel part of the steering input target anti-roll moment are calculated by the method shown in the first embodiment. Then, the ECU 50 performs the control of the stabilizer actuator 16a by the servo operation process so that the front-wheel stabilizer part of the target anti-roll moment is applied by the active stabilizer device 16, and performs the control of the stabilizer actuator 18a by the servo operation process so that the rear-wheel stabilizer part of the target anti-roll moment is applied by the active stabilizer device 18.

By the above second embodiment, it is possible to make the stabilizer control system and the damping force control system specialize in the mode (up-down, roll and pitch) which the respective actuators are good at, and it becomes possible to achieve the higher performance.

[Third Embodiment]

Next, a description will be given of a third embodiment. The third embodiment is different from the first and second embodiments in that the front-rear allocation rate of the road surface input target anti-roll moment is changed in order to reduce a control contradiction caused by dynamic characteristics of the stabilizer actuators 16a and 18a.

Here, a concrete description will be given of the control contradiction. If the responsiveness of the stabilizer actuators 16a and 18a is ideal, there is not the control contradiction in the entire frequency band. However, since there is actually the restriction of the responsiveness due to the configuration of the stabilizer actuators 16a and 18a, there is a case that the characteristics deteriorate by the influence of restriction compared with the case that the stabilizer control is not performed. For example, though a roll resonance gain adjacent to 2 (Hz) significantly decreases, there is a case that transfer characteristics from 4 (Hz) to 6 (Hz) deteriorate. It is thought that the deterioration is essentially caused by a control delay due to the dynamic characteristics of the stabilizer actuators 16a and 18a. Since there is the control contradiction (performance contradiction) due to the dynamic characteristics of the stabilizer actuators 16a and 18a, it can be said that the anti-roll moment should be allocated to the front and the rear, in consideration of the state of the road surface disturbance input to the respective stabilizer devices 16, 18 of the front and the rear.

Thus, in the third embodiment, the front-rear allocation rate of the road surface input target anti-roll moment is changed in order to appropriately reduce the control contradiction caused by the dynamic characteristics of the stabilizer actuators 16a and 18a. Concretely, the ECU 50 changes the front-rear allocation rate of the road surface input target anti-roll moment, in accordance with elapsed time from a start of the control based on the road surface input target anti-roll moment. Specifically, the ECU 50 sets the front-rear allocation to the rear side soon after the start of the control, and sets the front-rear allocation to the front side after a certain amount of time elapses from the start of the control.

The reason for performing the front-rear allocation in the above manner is as follows. It is thought that a variation of the road surface which generates the motion above the spring is first input from the front wheels 10f side, and then is input to the rear wheels 10r side after a delay time in accordance with the vehicle speed at the time. On the other hand, since the configuration above the spring is nearly regarded as a rigid body, it is preferable that desired amount of the anti-roll moment can be generated on the front wheels 10f side as well as on the rear wheels 10r side in total of the vehicle. Thus, since it is estimated that the road surface input is generated on the front wheels 10f side soon after the start of the control based on the road surface input target anti-roll moment, it is thought that an interference of the road surface input and the control input can be suppressed by generating the anti-roll moment on the rear wheels 10r side. Additionally, since it is estimated that the road surface input is generated on the rear wheels 10r side after the time calculated by a relationship between the vehicle speed and the wheelbase, specifically, after the time (hereinafter referred to as "time T1") calculated by " (wheelbase) / (vehicle speed at time of start of control) ", it is thought that the interference of the road surface input and the control input can be suppressed by generating the anti-roll moment on the front wheels 10f side. Thus, the ECU 50 sets the front-rear allocation to the rear side soon after the start of the control, and sets the front-rear allocation to the front side after the time T1 from the start of the control.

Additionally, in the third embodiment, the ECU 50 changes the front-rear allocation rate of the road surface input target anti-roll moment, in accordance with a rate of the road surface input to front and rear suspensions. Concretely, the ECU 50 changes the front-rear allocation rate in accordance with a frequency of the road surface input to the front and rear suspensions. Specifically, the ECU 50 calculates the front-rear allocation rate of the road surface input target anti-roll moment, based on following equations (1) to (3).

$$W_{front} = (\ddot{Z}_{wrL} - \ddot{Z}_{wrR}) \cdot G_{BPF} \quad (1)$$

$$W_{rear} = (\ddot{Z}_{wrL} - \ddot{Z}_{wrR}) \cdot G_{BPF} \quad (2)$$

$$W = W_{front} / (W_{front} + W_{rear}) \quad (3)$$

$\ddot{Z}_w$: VERTICAL ACCELERATION BELOW SPRING OF EACH WHEEL
$G_{BPF}$: BANDPASS FILTER FOUR CALCULATING SPECIFIED ROAD SURFACE INPUT FREQUENCT

First, the ECU 50 obtains the vertical acceleration below the spring of each wheel, and extracts the frequency of the road surface input in which there is a possibility that the control contradiction occurs, by the bandpass filter $G_{BPF}$, based on the equations (1) and (2). Then, the ECU 50 calculates the road surface inputs $W_{front}$ and $W_{rear}$ to the respective suspensions of the front wheels 10f side and the rear wheels 10r side. For example, a preliminarily calculated value is used as the frequency band (or the signal level) of the road surface input in which there is a possibility that the control contradiction occurs. Next, the ECU 50 calculates a front-rear allocation W of an input component below the spring from the road surface inputs $W_{front}$ and $W_{rear}$ calculated on the front and the rear, respectively, based on the equation (3). As shown in the equation (3), the front-rear allocation W of the input component below the spring corresponds to a front rate of the front-rear allocation. A calculation process by the equation (3) is omitted in case of being divided by 0 and in a micro region. Then, the ECU 50 calculates a front-rear allocation rate of the road surface input target anti-roll moment based on the front-rear allocation W of the input component below the spring. For example, the ECU 50 determines the front-rear allocation rate so that the control gain on the side where the control contradiction is likely to occur becomes small.

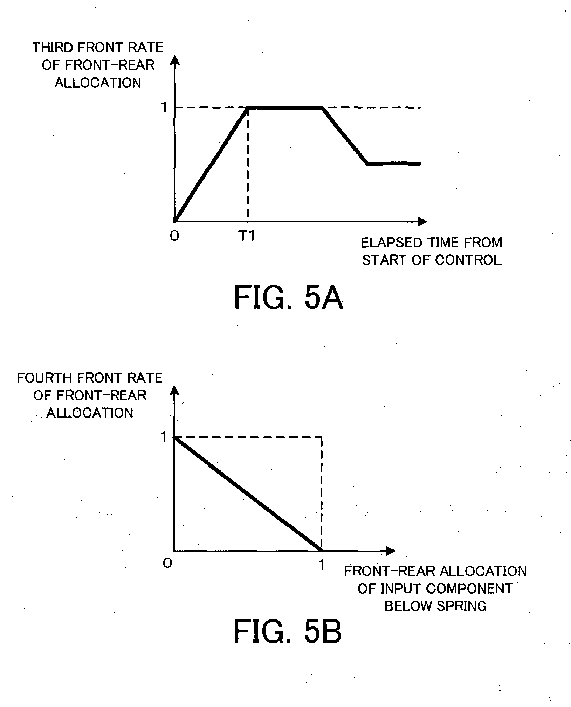

A concrete description will be given of a method for calculating the front-rear allocation rate of the road surface input target anti-roll moment in the third embodiment, with reference to FIGS. 5A and 5B. Here, a description will be given of a method for calculating the front rate of the front-rear allocation as the front-rear allocation rate. FIG. 5A shows an example of a map for calculating the front rate of the front-rear allocation (vertical axis) from the elapsed time (horizontal axis) from the start of the control based on the road surface input target anti-roll moment. Hereinafter, the front rate of the front-rear allocation calculated from the elapsed time from the start of the control is referred to as "third front rate of front-rear allocation". As shown in FIG. 5A, the third front rate of the front-rear allocation having the relatively small value is obtained soon after the start of the control (the third front rate of the front-rear allocation becomes large as time passes, from the start of the control to the time T1), and the third front rate of the front-rear allocation having the relatively large value is obtained after the time T1 from the start of the control.

FIG. 5B shows an example of a map for calculating the front rate of the front-rear allocation (vertical axis) from the front-rear allocation of the input component below the spring (horizontal axis). Hereinafter, the front rate of the front-rear allocation calculated from the front-rear allocation of the input component below the spring is referred to as "fourth front rate of the front-rear allocation". As shown in FIG. 5B, the fourth front rate of the front-rear allocation having the relatively large value is obtained when the front-rear allocation of the input component below the spring is small, and the fourth front rate of the front-rear allocation having the relatively small value is obtained when the front-rear allocation of the input component below the spring is large.

The ECU 50 calculates an average of the third front rate of the front-rear allocation and the fourth front rate of the front-rear allocation which are obtained by the above manner, and multiplies the average by the road surface input target anti-roll moment so as to allocate the road surface input target anti-roll moment to the front wheels 10f side and the rear wheels 10r side. Namely, the ECU 50 calculates the front-wheel part of the road surface input target anti-roll moment and the rear-wheel part of road surface input target anti-roll moment.

(Calculation Process)

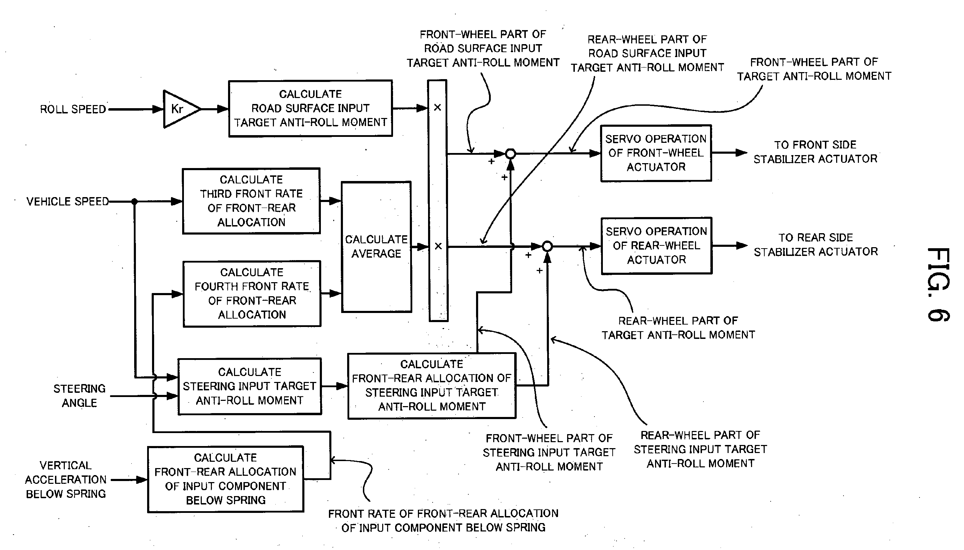

Next, a concrete description will be given of a calculation process in the third embodiment, with reference to FIG. 6. FIG. 6 is a schematic diagram showing the calculation process performed by the ECU 50 in the third embodiment.

The ECU 50 calculates the road surface input target anti-roll moment based on the roll speed obtained by the roll speed sensor 34 and the coefficient Kr. Additionally, the ECU 50 calculates the third front rate of the front-rear allocation from the elapsed time from the start of the control with reference to the map as shown in FIG. 5A. Additionally, the ECU 50 calculates the front-rear allocation of the input component below the spring from the vertical acceleration below the spring (obtained by a sensor), by using the above equations (1) to (3), and calculates the fourth front rate of the front-rear allocation from the front-rear allocation of the input component below the spring with reference to the map as shown in FIG. 5B. Then, the ECU 50 calculates the average of the third front rate of the front-rear allocation and the fourth front rate of the front-rear allocation which are obtained by the above manner, and multiplies the average by the road surface input target anti-roll moment so as to calculate the front-wheel part of the road surface input target anti-roll moment and the rear-wheel part of road surface input target anti-roll moment.

Next, the ECU 50 calculates the front-wheel part of the target anti-roll moment by adding the front-wheel part of the road surface input target anti-roll moment to the front-wheel part of the steering input target anti-roll moment, and calculates the rear-wheel part of the target anti-roll moment by adding the rear-wheel part of the road surface input target anti-roll moment to the rear-wheel part of the steering input target anti-roll moment. The front-wheel part of the steering input target anti-roll moment and the rear-wheel part of the steering input target anti-roll moment are calculated by the method shown in the first embodiment. Then, the ECU 50 performs the control of the stabilizer actuator 16a by a servo operation process so that the front-wheel part of the target anti-roll moment is applied by the active stabilizer device 16, and performs the control of the stabilizer actuator 18a by a servo operation process so that the rear-wheel part of the target anti-roll moment is applied by the active stabilizer device 18.

By the above third embodiment, it becomes possible to appropriately reduce the control contradiction caused by the dynamic characteristics of the stabilizer actuators 16a and 18a.

The above embodiment shows such an example that the front-rear allocation rate of the road surface input target anti-roll moment is changed based on the elapsed time from the start of the control and the front-rear allocation of the input component below the spring, but it is not limited to this. The front-rear allocation rate may be changed based on not only the elapsed time from the start of the control and the front-rear allocation of the input component below the spring but also the vehicle turning degree (lateral acceleration) and the vehicle speed which are shown in the first embodiment. Additionally, instead of using all of these, the front-rear allocation rate may be changed based on not less than one of the elapsed time from the start of the control, the front-rear allocation of the input component below the spring, the vehicle turning degree and the vehicle speed.

In addition, the third embodiment can be applied to the system including the damping force control system as shown in the second embodiment, too. In this case, when the stabilizer control in the third embodiment is performed, the control gain of the damping force control system in the vertical direction and the pitch direction can be increased and the control gain of the damping force control system in the roll direction can be decreased.

[Fourth Embodiment]

Next, a description will be given of a fourth embodiment. In the above first to third embodiments, the target anti-roll moment is calculated by only adding the road surface input target anti-roll moment to the steering input target anti-roll moment. In details, the front-wheel part of the target anti-roll moment is calculated by adding the front-wheel part of the road surface input target anti-roll moment to the front-wheel part of the steering input target anti-roll moment, and the rear-wheel part of the target anti-roll moment is calculated by adding the rear-wheel part of the road surface input target anti-roll moment to the rear-wheel part of the steering input target anti-roll moment. However, in the fourth embodiment, a weight in case of adding the road surface input target anti-roll moment to the steering input target anti-roll moment is varied in accordance with a road surface condition. Namely, in the fourth embodiment, a weighted addition of the road surface input target anti-roll moment to the steering input target anti-roll moment is performed in accordance with the road surface condition.

The reason is as follows. There is normally an upper limit of the control amount of the stabilizer control due to a consumption current, for example. In this case, if the steering wheel 14 is turned at the time of driving on the rough road (such a state that the control amount for suppressing the roll due to the road surface input becomes large), for example, there is a case that the control amount for suppressing the roll due to the steering input (namely, the control amount for suppressing the roll due to the lateral acceleration) becomes large, and the control amount exceeds the control amount of the stabilizer control. Therefore, since the control amount for suppressing the roll due to the road surface input cannot be sufficiently ensured and it becomes difficult to suppress the roll due to the road surface input, there is a possibility that the riding quality deteriorates against the target. On the other hand, if a fixed value of an allocation of the control amount for suppressing the roll due to the steering input and the control amount for suppressing the roll due to the road surface input is determined based on the upper limit of the control amount of the stabilizer control, there is a case that the control amount for suppressing the roll due to the road surface input is restricted even if the control amount for suppressing the roll due to the steering input is not used at all, for example. Therefore, there is a case that the control amount for suppressing the roll due to the steering input is wasted.

Thus, in the fourth embodiment, the weighted addition of the road surface input target anti-roll moment to the steering input target anti-roll moment is performed in accordance with the road surface condition. Concretely, the ECU 50 calculates a control gain (hereinafter referred to as "control gain for road surface input") used for the road surface input target anti-roll moment and a control gain (hereinafter referred to as "control gain for steering input") used for the steering input target anti-roll moment, based on a degree of the rough road. Then, the ECU 50 adds a value calculated by multiplying the road surface input target anti-roll moment by the control gain for the road surface input, to a value calculated by multiplying the steering input target anti-roll moment by the control gain for the steering input by, so as to calculate the target anti-roll moment.

Specifically, as the degree of the rough road becomes larger, the ECU 50 sets the control gain for the road surface input larger and sets the control gain for the steering input smaller. In other words, as the degree of the rough road becomes smaller, the ECU 50 sets the control gain for the road surface input smaller and sets the control gain for the steering input larger. For example, the ECU 50 judges the road surface condition (the degree of the rough road) based on an output of a vertical acceleration above spring sensor.

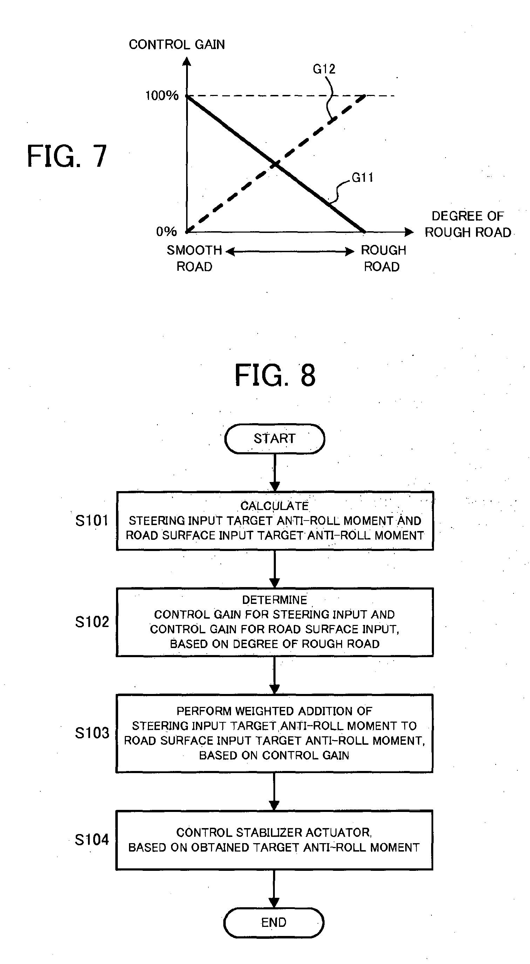

Here, a description will be given of a concrete example of a method for calculating the control gain for the steering input and the control gain for the road surface input in the fourth embodiment, with reference to FIG. 7. FIG. 7 shows a map for calculating the control gain (vertical axis) from the degree of the rough road (horizontal axis). The control gain has a value from 0 to 100 (%). Concretely, a graph G11 shown by a solid line shows an example of a map for calculating the control gain for the steering input, and a graph G12 shown by a broken line shows an example of a map for calculating the control gain for the road surface input. As shown in FIG. 7, it can be understood that the control gain for the steering input becomes smaller and the control gain for the road surface input becomes larger, as the degree of the rough road becomes larger. In other words, it can be understood that the control gain for the steering input becomes larger and the control gain for the road surface input becomes smaller, as a degree of the rough road becomes smaller, namely as the degree of the smooth road becomes larger.

Next, a description will be given of a stabilizer control process in the fourth embodiment, with reference to FIG. 8. The process is repeatedly executed by the ECU 50.

First, in step S101, the ECU 50 calculates the steering input target anti-roll moment and the road surface input target anti-roll moment. Concretely, the ECU 50 calculates the steering input target anti-roll moment based on the vehicle speed, the lateral acceleration and the steering angle, and calculates the road surface input target anti-roll moment based on the roll speed. Then, the ECU 50 allocates these anti-roll moments to the front and the rear. Specifically, based on the method shown in the first embodiment and/or the third embodiment, the ECU 50 calculates the front-wheel part of the steering input target anti-roll moment and the rear-wheel part of the steering input target anti-roll moment which are obtained by allocating the steering input target anti-roll moment to the front and the rear, and calculates the front-wheel part of the road surface input target anti-roll moment and the rear-wheel part of the road surface input target anti-roll moment which are obtained by allocating the road surface input target anti-roll moment to the front and the rear. Then, the process goes to step S102.

In step S102, the ECU 50 judges the degree of the rough road based on the vertical acceleration above spring, for example, and calculates the control gain for the steering input and the control gain for the road surface input based on the degree of the rough road. For example, the ECU 50 obtains these control gains with reference to the map as shown in FIG. 7. Then, the process goes to step S103.

In step S103, the ECU 50 performs the weighted addition of the steering input target anti-roll moment to the road surface input target anti-roll moment based on the control gain for the steering input and the control gain for the road surface input, so as to calculate the target anti-roll moment. Concretely, the ECU 50 adds a value calculated by multiplying the front-wheel part of the steering input target anti-roll moment by the control gain for the steering input, to a value calculated by multiplying the front-wheel part of the road surface input target anti-roll moment by the control gain for the road surface input, so as to calculate the front-wheel part of the target anti-roll moment. Additionally, the ECU 50 adds a value calculated by multiplying the rear-wheel part of the steering input target anti-roll moment by the control gain for the steering input, to a value calculated by multiplying the rear-wheel part of the road surface input target anti-roll moment by the control gain for the road surface input, so as to calculate the rear-wheel part of the target anti-roll moment. Then, the process goes to step S104.

In step S104, the ECU 50 performs the control of the stabilizer actuators 16a and 18a, based on the target anti-roll moment (the front-wheel part of the target anti-roll moment and the rear-wheel part of the target anti-roll moment) obtained in step S103. Then, the process ends.

By the above fourth embodiment, it becomes possible to maximally improve the riding quality at the time of driving on the rough road (such a state that the control amount for suppressing the roll due to the road surface input becomes large) even if there is the upper limit of the control amount of the stabilizer control. In addition, by the fourth embodiment, the performance of suppressing the roll due to the steering input does not spoil on the smooth road, either.

In the fourth embodiment, when the road surface input target anti-roll moment is allocated to the front and the rear, the front-rear allocation rate may be changed based on not less than one of the vehicle turning degree, the vehicle speed, the elapsed time from the start of the control and the front-rear allocation of the input component below the spring, as shown in the first and third embodiments, too.

In addition, the fourth embodiment can be applied to the system including the damping force control system as shown in the second embodiment, too.

[Fifth Embodiment]

Next, a description will be given of a fifth embodiment. The fifth embodiment is different from the above first to fourth embodiments in that the control amount for suppressing the roll due to the road surface input is changed in accordance with a frequency of the road surface input. Concretely, in order to appropriately reduce the road surface input on the rough road, the ECU 50 changes the control gain of the road surface input target anti-roll moment when the stabilizer control is performed.

Hereinafter, a concrete description will be given of first to third examples of the control method in the fifth embodiment.

(First Example)

In a first example, on the rough road, the ECU 50 performs the stabilizer control based on the road surface input target anti-roll moment when the frequency of the road surface input is within a predetermined value, and performs a control of the stabilizer actuators 16a and 18a so as to set a neutral state or a free state when the frequency of the road surface input exceeds the predetermined value.

Specifically, when the frequency of the road surface input is within a responsiveness range of the stabilizer actuators 16a and 18a (for example, when the frequency is from 1 (Hz) to 4 (Hz)), the ECU 50 performs the stabilizer control (hereinafter referred to as "rough road dodging control") based on the road surface input target anti-roll moment in order to appropriately dodge the input of the rough road. In this case, the ECU 50 performs the rough road dodging control based on the input below the spring without performing the control based on the steering input target anti-roll moment. In contrast, when the frequency of the road surface input exceeds the responsiveness range of the stabilizer actuators 16a and 18a (for example, when the frequency exceeds 6 (Hz)), the ECU 50 performs the control (hereinafter referred to as "free control") of the stabilizer actuators 16a and 18a so as to set the neutral state (in other words, N-point fixation) or the free state without performing the rough road dodging control.

The reason for performing the control is as follows. If the responsiveness of the stabilizer actuators 16a and 18a is ideal, there is not the control contradiction in the entire frequency band. However, since there is actually the restriction of the responsiveness due to the configuration of the stabilizer actuators 16a and 18a, there is a possibility that an effect of the control by the road surface input target anti-roll moment is not sufficiently obtained when the high frequency exceeding the above responsiveness range is input. On the other hand, if the stabilizer control for suppressing the roll is performed on the road surfaces having a lot of input such as the rough road, there is a case that an input to the suspension becomes too large and the riding quality deteriorates. Therefore, when the high frequency exceeding the above responsiveness range is input, it is thought that it is better to perform the control of setting an actuator angle of the stabilizer actuators 16a and 18a to the N-point fixation than to perform the control by the road surface input target anti-roll moment.

Thus, it is thought that performing the stabilizer control based on the road surface input target anti-roll moment is effective when the frequency of the road surface input is within the responsiveness range of the stabilizer actuators 16a and 18a, and it is thought that setting the stabilizer actuators 16a and 18a to the N-point fixation or the free state is effective when the frequency of the road surface input exceeds the responsiveness range. So, in the fifth embodiment, the ECU 50 performs the rough road dodging control when the frequency of the road surface input is within the responsiveness range of the stabilizer actuators 16a and 18a, and performs the free control when the frequency of the road surface input exceeds the responsiveness range. Therefore, it is possible to appropriately reduce the road surface input on the rough road, and it becomes possible to improve the riding quality.

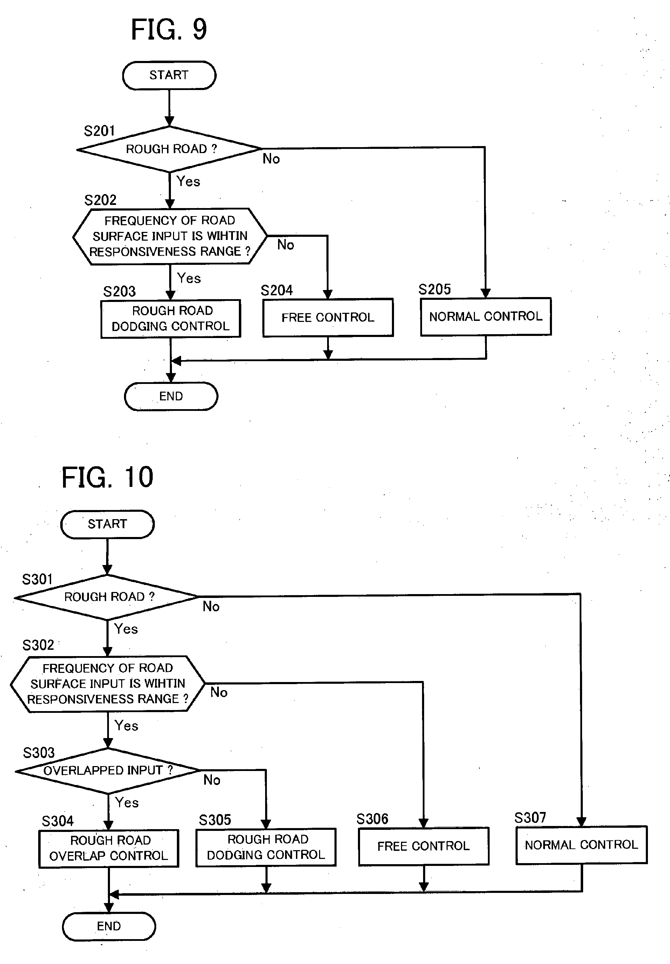

FIG. 9 is a flow chart showing a control process in the first example of the fifth embodiment. The process is repeatedly executed by the ECU 50.

First, in step S201, the ECU 50 determines whether or not the road is the rough road. Concretely, the ECU 50 determines whether or not the frequency of the road surface input is equal to or larger than a predetermined value. The predetermined value corresponds to the frequency which is higher than the frequency band in the responsiveness range of the stabilizer actuators 16a and 18a.

When the road is the rough road (step S201; Yes), the process goes to step S202. In contrast, when the road is not the rough road (step S201; No), the process goes to step S205. In step S205, the ECU 50 performs the stabilizer control based on the road surface input target anti-roll moment or the free control as usual (hereinafter, the control performed in step S205 is referred to as "normal control"). Then, the process ends.

In step S202, the ECU 50 determines whether or not the frequency of the road surface input is within the responsiveness range of the stabilizer actuators 16a and 18a. For example, the ECU 50 estimates the input component below the spring based on outputs of a vertical acceleration below spring sensor, a vertical acceleration above spring sensor and a wheel speed sensor, so as to perform the determination.

When the frequency of the road surface input is within the responsiveness range (step S202; Yes), the process goes to step S203. In this case, the ECU 50 performs the stabilizer control based on the road surface input target anti-roll moment in order to appropriately dodge the input of the rough road, namely the ECU 50 performs the rough road dodging control (step S203). Then, the process ends.

In contrast, when the frequency of the road surface input is not within the responsiveness range (step S202; No), the process goes to step S204. In this case, the ECU 50 performs the control of the stabilizer actuators 16a and 18a so as to set the neutral state (in other words, N-point fixation) or the free state, namely the ECU 50 performs the free control (step S204). Then, the process ends.

BY the above process, it is possible to appropriately reduce the road surface input on the rough road, and it becomes possible to improve the riding quality.

(Second Example)

Next, a description will be given of a second example of the control method in the fifth embodiment. In the second example, when the road surface input has an overlap with the frequency within the responsiveness range of the stabilizer actuators 16a and 18a and the frequency exceeding the responsiveness range on the rough road, the ECU 50 performs the rough road dodging control of any one of the stabilizer actuator 16a on the front wheels 10f side and the stabilizer actuator 18a on the rear wheels 10r side, and performs the free control of the other (hereinafter, the above control is referred to as "rough road overlap control"). Therefore, when the road surface input has the overlap with the frequency within the responsiveness range and the frequency exceeding the responsiveness range, it is possible to appropriately reduce both the inputs, and it becomes possible to improve the riding quality.

In the above rough road overlap control, the rough road dodging control of any one of the stabilizer actuator 16a on the front wheels 10f side and the stabilizer actuator 18a on the rear wheels 10r side corresponds to the first control, and the free control of the other corresponds to the second control.

FIG. 10 is a flow chart showing a control process in the second example of the fifth embodiment. The process is repeatedly executed by the ECU 50.

First, in step S301, the ECU 50 determines whether or not the road is the rough road. When the road is the rough road (step S301; Yes), the process goes to step S302. In contrast, when the road is not the rough road (step S301; No), the process goes to step S307. In this case, the ECU 50 performs the above normal control (step S307), and the process ends.

In step S302, the ECU 50 determines whether or not the frequency of the road surface input is within the responsiveness range of the stabilizer actuators 16a and 18a. When the frequency of the road surface input is within the responsiveness range (step S302; Yes), the process goes to step S303. In contrast, when the frequency of the road surface input is not within the responsiveness range (step S302; No), the process goes to step S306. In this case, the ECU 50 performs the free control (step S306), and the process ends.

In step S303, the ECU 50 determines whether or not the road surface input has the overlap with the frequency within the responsiveness range of the stabilizer actuators 16a and 18a and the frequency exceeding the responsiveness range (hereinafter, the determination is referred to as "input overlap determination"). For example, the ECU 50 estimates the input component below the spring based on the outputs of the vertical acceleration bellow spring sensor, the vertical acceleration above spring sensor and the wheel speed sensor, so as to perform the determination.

When the condition of the input overlap determination is satisfied (step S303; Yes), the process goes to step S304. In this case, the ECU 50 performs the rough road dodging control of any one of the stabilizer actuator 16a on the front wheels 10f side and the stabilizer actuator 18a on the rear wheels 10r side, and performs the free control of the other, namely the ECU 50 performs the rough road overlap control (step S304). Then, the process ends.

In contrast, when the condition of the input overlap determination is not satisfied (step S303; No), the process goes to step S305. In this case, the ECU 50 performs the rough road dodging control as shown in the first example (step S305), and the process ends.

By the above process, when the road surface input has the overlap with the frequency within the responsiveness range and the frequency exceeding the responsiveness range, it is possible to appropriately reduce both the inputs, and it becomes possible to improve the riding quality.

(Third Example)

Next, a description will be given of a third example of the control method in the fifth embodiment. In the third example, even when the road surface input has the overlap with the frequency within the responsiveness range and the frequency exceeding the responsiveness range on the rough road, in case of a turning state, the ECU 50 does not perform the above rough road dodging control of any one of the stabilizer actuator 16a on the front wheels 10f side and the stabilizer actuator 18a on the rear wheels 10r side. Namely, in case of the turning state, the ECU 50 does not perform the rough road overlap control as shown in the second example. Concretely, instead of the rough road dodging control, the ECU 50 performs the stabilizer control of any one of the stabilizer actuator 16a on the front wheels 10f side and the stabilizer actuator 18a on the rear wheels 10r side, based on the road surface input target anti-roll moment and the steering input target anti-roll moment. The ECU 50 performs the free control of the other so as to set the N-point fixation or the free state. Specifically, in accordance with a vehicle state and an object, the ECU 50 calculates the target anti-roll moment by performing the weighted addition of the road surface input target anti-roll moment to the steering input target anti-roll moment, so as to perform the stabilizer control. Hereinafter, the above control is referred to as "overlap control during turning".

In this case, by the manner similar to the above fourth embodiment, the ECU 50 calculates the control gain for the road surface input and the control gain for the steering input, based on the vehicle turning degree (for example, lateral acceleration and steering angle), and adds the value calculated by multiplying the control gain for the road surface input by the road surface input target anti-roll moment, to the value calculated by multiplying the control gain for the steering input by the steering input target anti-roll moment, so as to calculate the target anti-roll moment. For example, as the lateral accel-

eration becomes larger, the ECU 50 sets the control gain for the road surface input smaller and sets the control gain for the steering input larger. In other words, as the lateral acceleration becomes smaller, the ECU 50 sets the control gain for the road surface input larger and sets the control gain for the steering input smaller.

Even in case of the turning state on the rough road, the ECU 50 performs the rough road dodging control (hereinafter referred to as "dodging control during turning") as shown in the first example when the road surface input does not have the overlap with the frequency within the responsiveness range and the frequency exceeding the responsiveness range. Additionally, in case of not turning state (namely, in case of going straight), the ECU 50 performs the rough road overlap control (hereinafter referred to as "overlap control during going straight") as shown in the second example when the road surface input has the overlap with the frequency within the responsiveness range and the frequency exceeding the responsiveness range. In addition, in case of going straight, the ECU 50 performs the rough road dodging control (hereinafter referred to as "dodging control during going straight") as shown in the first example when the road surface input does not have the overlap with the frequency within the responsiveness range and the frequency exceeding the responsiveness range.

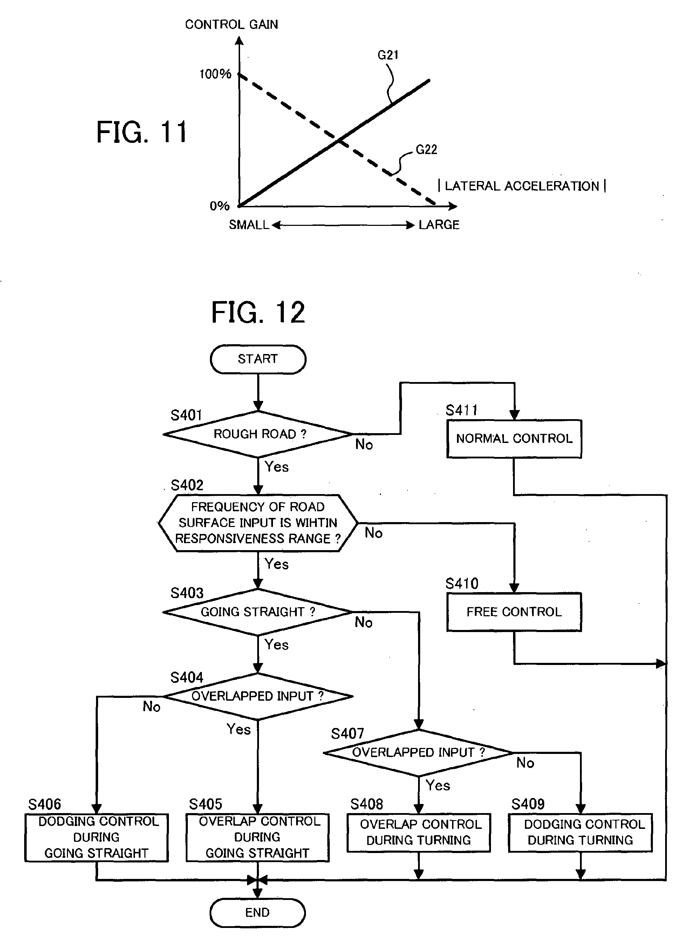

Here, a description will be given of a concrete example of a method for calculating the control gain for the steering input and the control gain for the road surface input in the third example of the fifth embodiment, with reference to FIG. 11. FIG. 11 shows a map for calculating the control gain (vertical axis) from the lateral acceleration (horizontal axis). The control gain has a value from 0 to 100 (%). Concretely, a graph G21 shown by a solid line shows an example of a map for calculating the control gain for the steering input, and a graph G22 shown by a broken line shows an example of a map for calculating the control gain for the road surface input. As shown in FIG. 11, it can be understood that the control gain for the steering input becomes larger and the control gain for the road surface input becomes smaller, as the lateral acceleration becomes larger. In other words, it can be understood that the control gain for the steering input becomes smaller and the control gain for the road surface input becomes larger, as the lateral acceleration becomes smaller. By performing the control by using the map during turning, it becomes possible to appropriately balance the riding quality with the handling and stability without sacrificing the steering feeling.

FIG. 12 is a flow chart showing a control process in the third example of the fifth embodiment. The process is repeatedly executed by the ECU 50.

First, in step S401, the ECU 50 determines whether or not the road is the rough road. When the road is the rough road (step S401; Yes), the process goes to step S402. In contrast, when the road is not the rough road (step S401; No), the process goes to step S411. In this case, the ECU 50 performs the normal control (step S411), and the process ends.

In step S402, the ECU 50 determines whether or not the frequency of the road surface input is within the responsiveness range of the stabilizer actuators 16a and 18a. When the frequency of the road surface input is within the responsiveness range (step S402; Yes), the process goes to step S403. In contrast, when the frequency of the road surface input is not within the responsiveness range (step S402; No), the process goes to step S410. In this case, the ECU 50 performs the free control (step S410), and the process ends.

In step S403, the ECU 50 determines whether or not the vehicle is going straight. For example, the ECU 50 performs the determination based on the lateral acceleration, the yaw rate and the steering angle. When the vehicle is going straight (step S403; Yes), the process goes to step S404. In contrast, when the vehicle is not going straight (step S403; No), namely when the vehicle is turning, the process goes to step S407.

The processes after step S403 (steps S404 to S406) are performed when the vehicle is going straight on the rough road. First, in step S404, the ECU 50 performs the input overlap determination. When the condition of the input overlap determination is satisfied (step S404; Yes), the process goes to step S405. In this case, the ECU 50 performs the overlap control during going straight (step S405), and the process ends. In contrast, when the condition of the input overlap determination is not satisfied (step S404; No), the process goes to step S406. In this case, the ECU 50 performs the dodging control during going straight (step S406), and the process ends.

Meanwhile, the processes after step S407 (steps S407 to S409) are performed when the vehicle is turning on the rough road. First, in step S407, the ECU 50 performs the input overlap determination. When the condition of the input overlap determination is satisfied (step S407; Yes), the process goes to step S408. In this case, the ECU 50 performs the overlap control during turning (step S408), and the process ends. In contrast, when the condition of the input overlap determination is not satisfied (step S407; No), the process goes to step S409. In this case, the ECU 50 performs the dodging control during turning (step S409), and the process ends.

By the above process, when the vehicle is turning on the rough road, it becomes possible to appropriately balance the riding quality with the handling and stability without sacrificing the steering feeling.

(Modification Of Fifth Embodiment)

In the fifth embodiment, when the target anti-roll moment is calculated, the weight in case of adding the road surface input target anti-roll moment to the steering input target anti-roll moment may be varied in accordance with the road surface condition (the degree of the rough road), as shown in the fourth embodiment, too.

Additionally, in the fifth embodiment, when the road surface input target anti-roll moment is allocated to the front and the rear, the front-rear allocation rate may be changed based on not less than one of the vehicle turning degree, the vehicle speed, the elapsed time from the start of the control and the front-rear allocation of the input component below the spring, as shown in the first and third embodiments, too.

The fifth embodiment can be applied to the system including the damping force control system as shown in the second embodiment, too.

INDUSTRIAL APPLICABILITY

This invention can be used for a vehicle which performs a variable control of a torsional stiffness of a stabilizer provided between right and left wheels.

**Claims**

1. A stabilizer control device for a vehicle which performs a variable control of a torsional stiffness of a stabilizer provided between right and left wheels of the vehicle, comprising:

   an absolute roll information obtaining unit which obtains absolute roll information above a spring from an output of a sensor installed above the spring in the vehicle; and
   a stabilizer control unit which calculates a first anti-roll moment based on the absolute roll information and controls the stabilizer based on the first anti-roll moment,
   wherein the stabilizer control unit changes a control amount of the stabilizer based on the first anti-roll moment, in accordance with a frequency of a road surface input to front and rear suspensions.

2. The stabilizer control device for the vehicle according to claim 1,
   wherein the stabilizer control unit further calculates a second anti-roll moment based on a steering input and controls the stabilizer based on the first anti-roll moment and the second anti-roll moment.

3. The stabilizer control device for the vehicle according to claim 1,
   wherein the stabilizer control unit changes a front-rear allocation rate for allocating the first anti-roll moment to a front wheels side and a rear wheels side, in accordance with a vehicle turning degree.

4. The stabilizer control device for the vehicle according to claim 1,
   wherein the stabilizer control unit changes a front-rear allocation rate for allocating the first anti-roll moment to a front wheels side and a rear wheels side, in accordance with a vehicle speed.

5. The stabilizer control device for the vehicle according to claim 1, further comprising a damping force control unit which performs a control of the vehicle in a vertical direction, a roll direction and a pitch direction, by applying a damping force, wherein, when the control by the stabilizer control unit is performed, the damping force control unit increases a control gain in the vertical direction and the pitch direction and decreases a control gain in the roll direction, in the control of the damping force.

6. The stabilizer control device for the vehicle according to claim 1, wherein the stabilizer control unit changes a front-rear allocation rate for allocating the first anti-roll moment to a front wheels side and a rear wheels side, in accordance with elapsed time from a start of the control based on the first anti-roll moment.

7. The stabilizer control device for the vehicle according to claim 1, wherein the stabilizer control unit changes a front-rear allocation rate for allocating the first anti-roll moment to a front wheels side and a rear wheels side, in accordance with a rate of a road surface input to front and rear suspensions.

8. The stabilizer control device for the vehicle according to claim 1, wherein the stabilizer control unit performs the control of the stabilizer based on the first anti-roll moment when the frequency of the road surface input is within a predetermined value, and performs a control of the stabilizer so as to set a neutral state or a free state when the frequency of the road surface input exceeds the predetermined value.

9. The stabilizer control device for the vehicle according to claim 1, wherein, when the road surface input has an overlap with a frequency input within a predetermined value and a frequency exceeding the predetermined value, the stabilizer control unit performs a first control of the stabilizer provided to one of front wheels and rear wheels, based on the first anti-roll moment, and performs a second control of the stabilizer provided to the other so as to set a neutral state or a free state.

10. The stabilizer control device for the vehicle according to claim 9, wherein, when the first control is performed in a turning state, the stabilizer control unit controls the stabilizer based on the first anti-roll moment and a second anti-roll moment calculated by a steering input, and sets a control gain of the first anti-roll moment smaller and sets a control gain of the second anti-roll moment larger, a"s a vehicle turning degree becomes larger.

11. The stabilizer control device for the vehicle according to claim 2, wherein the stabilizer control unit sets a control gain of the first anti-roll moment smaller and sets a control gain of the second anti-roll moment larger, as a vehicle turning degree becomes larger.

12. The stabilizer control device for the vehicle according to claim 2, wherein the stabilizer control unit sets a control gain of the first anti-roll moment larger and sets a control gain of the second anti-roll moment smaller, as a degree of a rough road becomes larger.

**Patentansprüche**

1. Stabilisatorsteuerungsvorrichtung für ein Fahrzeug, welche eine variable Steuerung von einer Torsionssteifigkeit von einem Stabilisator ausführt, welcher zwischen rechten und linken Rädern von dem Fahrzeug vorgesehen ist, mit:

einer Absolutrollinformationserlangungseinheit, welche eine Absolutrollinformation über eine Feder von einer Ausgabe von einem Sensor erlangt, der über der Feder in dem Fahrzeug eingebaut ist; und
einer Stabilisatorsteuerungseinheit, welche auf der Grundlage von der Absolutrollinformation ein erstes Antirollmoment berechnet und auf der Grundlage von dem ersten Antirollmoment den Stabilisator steuert, wobei die Stabilisatorsteuerungseinheit auf der Grundlage von dem ersten Antirollmoment einen Steuerungsbetrag von dem Stabilisator in Übereinstimmung mit einer Frequenz einer Fahrbahnoberflächeneingabe auf vordere und hintere Aufhängungen ändert.

2. Stabilisatorsteuerungsvorrichtung für das Fahrzeug gemäß Anspruch 1, wobei die Stabilisatorsteuerungseinheit ferner auf der Grundlage von einer Lenkeingabe ein zweites Antirollmoment berechnet und auf der Grundlage von dem ersten Antirollmoment und dem zweiten Antirollmoment den Stabilisator steuert.

3. Stabilisatorsteuerungsvorrichtung für das Fahrzeug gemäß Anspruch 1, wobei die Stabilisatorsteuerungseinheit eine Vorne-Hinten-Zuweisungsrate zum Zuweisen des ersten Antirollmoments zu einer Vorderräderseite und einer Hinterräderseite in Übereinstimmung mit einem Fahrzeugkurvengrad ändert.

**4.** Stabilisatorsteuerungsvorrichtung für das Fahrzeug gemäß Anspruch 1, wobei die Stabilisatorsteuerungseinheit eine Vorne-Hinten-Zuweisungsrate zum Zuweisen des ersten Antirollmoments zu einer Vorderräderseite und einer Hinterräderseite in Übereinstimmung mit einer Fahrzeuggeschwindigkeit ändert.

**5.** Stabilisatorsteuerungsvorrichtung für das Fahrzeug gemäß Anspruch 1, ferner mit einer Dämpfungskraftsteuerungseinheit, welche eine Steuerung des Fahrzeugs in einer vertikalen Richtung, einer Rollrichtung und einer Nickrichtung durch Aufbringen einer Dämpfungskraft ausführt, wobei, wenn die Steuerung durch die Stabilisatorsteuerungseinheit ausgeführt wird, die Dämpfungskraftsteuerungseinheit bei der Steuerung der Dämpfungskraft eine Steuerungsverstärkung in der vertikalen Richtung und der Nickrichtung erhöht und eine Steuerungsverstärkung in der Rollrichtung verringert.

**6.** Stabilisatorsteuerungsvorrichtung für das Fahrzeug gemäß Anspruch 1, wobei die Stabilisatorsteuerungseinheit eine Vorne-Hinten-Zuweisungsrate zum Zuweisen des ersten Antirollmoments zu einer Vorderräderseite und einer Hinterräderseite in Übereinstimmung mit verstrichener Zeit von einem Start der auf dem ersten Antirollmoment basierenden Steuerung ändert.

**7.** Stabilisatorsteuerungsvorrichtung für das Fahrzeug gemäß Anspruch 1, wobei die Stabilisatorsteuerungseinheit eine Vorne-Hinten-Zuweisungsrate zum Zuweisen des ersten Antirollmoments zu einer Vorderräderseite und einer Hinterräderseite in Übereinstimmung mit einer Rate einer Fahrbahnoberflächeneingabe auf vordere und hintere Aufhängungen ändert.

**8.** Stabilisatorsteuerungsvorrichtung für das Fahrzeug gemäß Anspruch 1, wobei die Stabilisatorsteuerungseinheit auf der Grundlage des ersten Antirollmoments die Steuerung des Stabilisators ausführt, wenn die Frequenz der Fahrbahnoberflächeneingabe innerhalb eines vorbestimmten Werts ist, und eine Steuerung des Stabilisators ausführt, um einen neutralen Zustand oder einen freien Zustand festzulegen, wenn die Frequenz der Fahrbahnoberflächeneingabe den vorbestimmten Wert übersteigt.

**9.** Stabilisatorsteuerungsvorrichtung für das Fahrzeug gemäß Anspruch 1, wobei, wenn die Fahrbahnoberflächeneingabe mit einer Frequenzeingabe innerhalb eines vorbestimmten Werts überlappt und eine Frequenz hat, die den vorbestimmten Wert übersteigt, die Stabilisatorsteuerungseinheit eine für eines von den Vorderrädern und den Hinterräder vorgesehene erste Steuerung des Stabilisators auf der Grundlage des ersten Antirollmoments ausführt, und eine für das andere vorgesehene zweite Steuerung des Stabilisators ausführt, um einen neutralen Zustand oder einen freien Zustand festzulegen.

**10.** Stabilisatorsteuerungsvorrichtung für das Fahrzeug gemäß Anspruch 9, wobei, wenn die erste Steuerung in einem Drehzustand ausgeführt wird, die Stabilisatorsteuerungseinheit auf der Grundlage von dem ersten Antirollmoment und einem zweiten Antirollmoment, das bei einer Lenkeingabe berechnet wird, den Stabilisator steuert und mit zunehmenden Fahrzeugkurvengrad eine kleinere Steuerungsverstärkung des ersten Antirollmoments festlegt und eine größere Steuerungsverstärkung des zweiten Antirollmoments festlegt.

**11.** Stabilisatorsteuerungsvorrichtung für das Fahrzeug gemäß Anspruch 2, wobei die Stabilisatorsteuerungseinheit mit zunehmenden Fahrzeugkurvengrad eine kleinere Steuerungsverstärkung des ersten Antirollmoments festlegt und eine größere Steuerungsverstärkung des zweiten Antirollmoments festlegt.

**12.** Stabilisatorsteuerungsvorrichtung für das Fahrzeug gemäß Anspruch 2, wobei die Stabilisatorsteuerungseinheit mit zunehmenden Rauhigkeitsgrad von einer Straße eine größere Steuerungsverstärkung des ersten Antirollmoments festlegt und eine kleinere Steuerungsverstärkung des zweiten Antirollmoments festlegt.

**Revendications**

**1.** Dispositif de commande de stabilisateur pour un véhicule qui réalise une commande variable d'une rigidité en torsion d'un stabilisateur placé entre les roues avant gauche et droite du véhicule, comprenant :

une unité d'obtention d'information de roulis absolu qui obtient une information de roulis absolu au-dessus d'un ressort depuis une sortie d'un capteur installé au-dessus du ressort dans le véhicule ; et
une unité de commande de stabilisateur qui calcule un premier moment antiroulis en fonction de l'information de roulis absolu et commande le stabilisateur en fonction du premier moment antiroulis,
dans lequel l'unité de commande de stabilisateur change une quantité de commande du stabilisateur en fonction du premier moment antiroulis, selon une fréquence d'une entrée de surface de route aux suspensions avant et arrière.

2. Dispositif de commande de stabilisateur pour le véhicule selon la revendication 1, dans lequel l'unité de commande de stabilisateur calcule en outre un second moment antiroulis en fonction d'une entrée de direction et commande le stabilisateur en fonction du premier moment antiroulis et du second moment antiroulis.

3. Dispositif de commande de stabilisateur pour le véhicule selon la revendication 1, dans lequel l'unité de commande de stabilisateur change un rapport d'allocation avant-arrière pour allouer le premier moment antiroulis à un côté de roues arrière et un côté de roues avant, en fonction d'un degré de giration du véhicule.

4. Dispositif de commande de stabilisateur pour le véhicule selon la revendication 1, dans lequel l'unité de commande de stabilisateur change un rapport d'allocation avant-arrière pour allouer le premier moment antiroulis à un côté de roues arrière et un côté de roues avant, en fonction d'une vitesse de véhicule.

5. Dispositif de commande de stabilisateur pour le véhicule selon la revendication 1, comprenant en outre une unité de commande de force d'amortissement qui réalise une commande du véhicule dans une direction verticale, une direction de roulis et une direction de lacet, en appliquant une force d'amortissement, dans lequel, quand la commande par l'unité de commande de stabilisateur est réalisée, l'unité de commande de force d'amortissement augmente un gain de commande dans la direction verticale et la direction de lacet et diminue un gain de commande dans la direction de roulis, dans la commande de la force d'amortissement.

6. Dispositif de commande de stabilisateur pour le véhicule selon la revendication 1, dans lequel l'unité de commande de stabilisateur change un rapport d'allocation avant-arrière pour allouer le premier moment antiroulis à un côté de roues avant et un côté de roues arrière, en fonction du temps écoulé depuis un début de la commande en fonction du premier moment antiroulis.

7. Dispositif de commande de stabilisateur pour le véhicule selon la revendication 1, dans lequel l'unité de commande de stabilisateur change un rapport d'allocation avant-arrière pour allouer le premier moment antiroulis à un côté de roues avant et un côté de roues arrière, en fonction d'un rapport d'une entrée de surface de route aux suspensions avant et arrière.

8. Dispositif de commande de stabilisateur pour le véhicule selon la revendication 1, dans lequel l'unité de commande de stabilisateur réalise la commande du stabilisateur en fonction du premier moment antiroulis quand la fréquence de l'entrée de surface de route est dans une plage de valeur prédéterminée, et réalise une commande du stabilisateur de façon à régler un état neutre ou un état libre quand la fréquence de l'entrée de surface de route dépasse la valeur prédéterminée.

9. Dispositif de commande de stabilisateur pour le véhicule selon la revendication 1, dans lequel quand l'entrée de surface de route a un recouvrement avec une entrée de fréquence dans une valeur prédéterminée et une fréquence dépassant la valeur prédéterminée, l'unité de commande de stabilisateur réalise une première commande du stabilisateur fournie à l'une des roues avant et des roues arrière, en fonction du premier moment antiroulis, et réalise une seconde commande du stabilisateur fournie à l'autre de façon à établir un état neutre ou un état libre.

10. Dispositif de commande de stabilisateur pour le véhicule selon la revendication 9, dans lequel, quand la première commande est réalisée dans un état de virage, l'unité de commande de stabilisateur commande le stabilisateur en fonction du premier moment antiroulis et d'un second moment antiroulis calculé par une entrée de direction, et règle un gain de commande du premier moment antiroulis plus petit et règle un gain de commande du second moment antiroulis plus grand, quand un degré de giration du véhicule devient plus grand.

11. Dispositif de commande de stabilisateur pour le véhicule selon la revendication 2, dans lequel l'unité de commande de stabilisateur règle un gain de commande du premier moment antiroulis plus petit et règle un gain de commande du second moment antiroulis plus grand, quand un degré de giration du véhicule devient plus grand.

12. Dispositif de commande de stabilisateur pour le véhicule selon la revendication 2, dans lequel l'unité de commande de stabilisateur règle un gain de commande du premier moment antiroulis plus grand et règle un gain de commande du second moment antiroulis plus petit, quand un degré de rugosité de la route devient plus grand.

# FIG. 1

FIRST FRONT RATE
OF FRONT-REAR
ALLOCATION

1

0            | LATERAL ACCELERATION |

# FIG. 2A

SECOND FRONT RATE
OF FRONT-REAR
ALLOCATION

1

0                    VEHICLE SPEED

# FIG. 2B

FIG. 3

FRONT-WHEEL PART OF
ROAD SURFACE INPUT
TARGET ANTI-ROLL MOMENT

REAR-WHEEL PART OF
ROAD SURFACE INPUT
TARGET ANTI-ROLL MOMENT

FRONT-WHEEL PART OF
TARGET ANTI-ROLL MOMENT

ROLL SPEED → Kr → CALCULATE ROAD SURFACE INPUT TARGET ANTI-ROLL MOMENT → ×

SERVO OPERATION OF FRONT-WHEEL ACTUATOR → TO FRONT SIDE STABILIZER ACTUATOR

VEHICLE SPEED → CALCULATE SECOND FRONT RATE OF FRONT-REAR ALLOCATION → ×

SERVO OPERATION OF REAR-WHEEL ACTUATOR → TO REAR SIDE STABILIZER ACTUATOR

LATERAL ACCELERATION → CALCULATE FIRST FRONT RATE OF FRONT-REAR ALLOCATION → ×

REAR-WHEEL PART OF
TARGET ANTI-ROLL MOMENT

STEERING ANGLE → CALCULATE STEERING INPUT TARGET ANTI-ROLL MOMENT → CALCULATE FRONT-REAR ALLOCATION OF STEERING INPUT TARGET ANTI-ROLL MOMENT

+ +

FRONT-WHEEL PART OF
STEERING INPUT TARGET
ANTI-ROLL MOMENT

REAR-WHEEL PART OF
STEERING INPUT TARGET
ANTI-ROLL MOMENT

**FIG. 4**

VERTICAL ACCELERATION AT POSITION OF CENTER OF GRAVITY → $1/s$ → VERTICAL SPEED AT POSITION OF CENTER OF GRAVITY → Kh → TARGET VERTICAL VIBRATION SUPPRESSION FORCE

PITCH SPEED → Kp → TARGET ANTI-PITCH MOMENT

DAMPING FORCE CONTROL PART OF ROAD SURFACE INPUT TARGET ANTI-ROLL MOMENT

ROLL SPEED → Kr → CALCULATE ROAD SURFACE INPUT TARGET ANTI-ROLL MOMENT ALLOCATION

TRANSFORM OPERATION POSITION IN CENTER OF GRAVITY POSITION MODE→ EACH WHEEL POSITION

EACH WHEEL TARGET DAMPING FORCE

SERVO OPERATION OF RIGHT FRONT WHEEL ACTUATOR → TO RIGHT FRONT WHEEL ACTUATOR FOR DAMPING FORCE CONTROL

SERVO OPERATION OF LEFT FRONT WHEEL ACTUATOR → TO LEFT FRONT WHEEL ACTUATOR FOR DAMPING FORCE CONTROL

SERVO OPERATION OF RIGHT REAR WHEEL ACTUATOR → TO RIGHT REAR WHEEL ACTUATOR FOR DAMPING FORCE CONTROL

SERVO OPERATION OF LEFT REAR WHEEL ACTUATOR → TO LEFT REAR WHEEL ACTUATOR FOR DAMPING FORCE CONTROL

STABILIZER PART OF ROAD SURFACE INPUT TARGET ANTI-ROLL MOMENT

FRONT-WHEEL STABILIZER PART OF ROAD SURFACE INPUT TARGET ANTI-ROLL MOMENT

REAR-WHEEL STABILIZER PART OF ROAD SURFACE INPUT TARGET ANTI-ROLL MOMENT

SERVO OPERATION OF FRONT-WHEEL ACTUATOR → TO FRONT SIDE STABILIZER ACTUATOR

VEHICLE SPEED → CALCULATE SECOND FRONT RATE OF FRONT-REAR ALLOCATION

SERVO OPERATION OF REAR-WHEEL ACTUATOR → TO REAR SIDE STABILIZER ACTUATOR

FRONT-WHEEL STABILIZER PART OF TARGET ANTI-ROLL MOMENT

LATERAL ACCELERATION → CALCULATE FIRST FRONT RATE OF FRONT-REAR ALLOCATION

REAR-WHEEL STABILIZER PART OF TARGET ANTI-ROLL MOMENT

STEERING ANGLE → CALCULATE STEERING INPUT TARGET ANTI-ROLL MOMENT → CALCULATE FRONT-REAR ALLOCATION OF STEERING INPUT TARGET ANTI-ROLL MOMENT

REAR-WHEEL PART OF STEERING INPUT TARGET ANTI-ROLL MOMENT

FRONT-WHEEL PART OF STEERING INPUT TARGET ANTI-ROLL MOMENT

THIRD FRONT RATE
OF FRONT-REAR
ALLOCATION

1

O          T1          ELAPSED TIME FROM
START OF CONTROL

# FIG. 5A

FOURTH FRONT RATE
OF FRONT-REAR
ALLOCATION

1

O                    1    FRONT-REAR ALLOCATION
OF INPUT COMPONENT
BELOW SPRING

# FIG. 5B

# FIG. 6

EP 2 397 348 B1

## FIG. 7

CONTROL GAIN

100%

G12

G11

0%

DEGREE OF
ROUGH ROAD

SMOOTH ◄──────► ROUGH
ROAD              ROAD

## FIG. 8

START

S101  CALCULATE
STEERING INPUT TARGET ANTI-ROLL MOMENT AND
ROAD SURFACE INPUT TARGET ANTI-ROLL MOMENT

S102  DETERMINE
CONTROL GAIN FOR STEERING INPUT AND
CONTROL GAIN FOR ROAD SURFACE INPUT,
BASED ON DEGREE OF ROUGH ROAD

S103  PERFORM WEIGHTED ADDITION OF
STEERING INPUT TARGET ANTI-ROLL MOMENT TO
ROAD SURFACE INPUT TARGET ANTI-ROLL MOMENT,
BASED ON CONTROL GAIN

S104  CONTROL STABILIZER ACTUATOR,
BASED ON OBTAINED TARGET ANTI-ROLL MOMENT

END

## FIG. 9

START

S201 ROUGH ROAD ?
— No →

Yes ↓

S202 FREQUENCY OF ROAD SURFACE INPUT IS WIHTIN RESPONSIVENESS RANGE ?
— No →

Yes ↓

S203 ROUGH ROAD DODGING CONTROL

S204 FREE CONTROL

S205 NORMAL CONTROL

END

## FIG. 10

START

S301 ROUGH ROAD ?
— No →

Yes ↓

S302 FREQUENCY OF ROAD SURFACE INPUT IS WIHTIN RESPONSIVENESS RANGE ?
— No →

Yes ↓

S303 OVERLAPPED INPUT ?
— No →

Yes ↓

S304 ROUGH ROAD OVERLAP CONTROL

S305 ROUGH ROAD DODGING CONTROL

S306 FREE CONTROL

S307 NORMAL CONTROL

END

**FIG. 11**

**FIG. 12**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005238971 A
- JP 2006007803 A
- JP 2006256368 A
- JP 2007245887 A
- US 2007088476 A1
- WO 2007054500 A1
- EP 1719643 A1